# EUROPÄISCHE PATENTSCHRIFT

(11) **EP 1 582 402 B1**
(45) Veröffentlichungstag und Bekanntmachung des Hinweises auf die Patenterteilung: **10.03.2010**
(21) Anmeldenummer: 04029940.6
(22) Anmeldetag: 17.12.2004
(51) Int. Cl.: B60N 3/10

(54) **Halteeinrichtung für einen Nahrungsmittel- und/oder Getränkebehälter und Kraftfahrzeug mit einer derartigen Halteeinrichtung**
Holding device for a food and/or beverage container and automotive vehicle with such a holding device
Dispositif de maintien pour récipient de nourriture et/ou boisson et véhicule automobile equipé d'un tel dispositif

(30) Priorität: 30.03.2004 DE 102004015347
(43) Veröffentlichungstag der Anmeldung: 05.10.2005
(73) Patentinhaber: Dr. Ing. h.c. F. Porsche Aktiengesellschaft, 70435 Stuttgart (DE)
(72) Erfinder: Stephan, Friedrich, 71282 Hemmingen (DE); Frank, Martin, 75417 Muehlacker (DE); Schneider, Andreas, 72250 Freudenstadt (DE)

(56) Entgegenhaltungen:
- EP-A1- 1 300 282
- DE-A1- 19 820 511
- JP-A- 6 115 390
- JP-A- 2002 029 303
- US-A- 6 019 334

## Beschreibung

Bei der Erfindung wird ausgegangen von einer Halteeinrichtung für einen Nahrungsmittel - und/oder Getränkebehälter im Innenraum eines Kraftfahrzeugs, gemäß Oberbegriff des Anspruchs 1 bzw. von einem Kraftfahrzeug mit einer derartigen Halteeinrichtung.

Eine derartige Einrichtung ist aus der EP 1 300 282 A1 der Anmelderin bekannt.

Aus der DE 198 20 511 C2 ist eine auch als so genannter Cupholder bezeichnete Halteeinrichtung bekannt. In einem Gehäuse wird in Ruhe - bzw. Einfahrstellung ein Haltearm mit einem Aufnahmeelement für einen Behälter aufgenommen. Der Haltearm ist durch eine Gehäuseöffnung in eine Ausfahrstellung, die einer Gebrauchsstellung entspricht, aus dem Gehäuse heraus verschwenkbar. An dem Haltearm ist ferner eine Blende einer Blendenanordnung befestigt, so dass die Blende zusammen mit dem Haltearm bewegt wird. Die Blendenanordnung ist mehrteilig ausgeführt und besitzt somit neben der fest am Haltearm angebrachten Blende noch eine fest und unbewegbar an dem Gehäuse gehaltene Blende. In eingeschwenkter Einfahrstellung des Haltearms verschließt mithin die Blendenanordnung die Gehäuseöffnung vollständig und in Ausfahrstellung wird ein Teil dieser Gehäuseöffnung durch die am Haltearm befestigte Blende freigegebenen, durch welche Teilöffnung der Haltearm herausgeschwenkt wird. Die andere Teilöffnung der Gehäuseöffnung ist durch die gehäusefeste Blende stets fest verschlossen.

Die US 60 19 334 A offenbart einen Cupholder, bei dem das Aufnahmeelement für den Behälter feststehend ausgebildet ist. Eine Öffnung des becherförmigen Aufnahmeelements wird von einer Blendenanordnung verschlossen, welche zweiteilig ausgeführt ist und deren Blenden an dem Aufnahmeelement selbst schwenkbar gehalten sind. Die Schwenkachsen der beiden Blenden verlaufen parallel und mit Abstand zueinander. Um die Öffnung freigeben zu können, wird eine der Blenden manuell aufgeklappt, und durch eine Zwangskopplung mittels eines Hebels wird die andere Blende in Öffnungsrichtung und umgekehrt mitgenommen.

Aufgabe der Erfindung ist es, eine einfach zu bedienende und optisch ansprechende Halteeinrichtung der eingangs genannten Art bzw. ein eine derartige Halteeinrichtung aufweisende Kraftfahrzeug anzugeben.

Gelöst wird diese Aufgabe mit einer Halteeinrichtung mit den in Anspruch 1 genannten Merkmalen bzw. mit einem Kraftfahrzeug gemäß Anspruch 13. Weitere Ausgestaltungen der Erfindung sind jeweils in den Unteransprüchen angegeben.

Die mit der Erfindung hauptsächlich erzielten Vorteile sind darin zu sehen, dass durch die bewegliche Lagerung der Blenden die Gehäuseöffnung vollständig freigebbar ist für das Ausfahren des Haltearms in Ausfahrstellung und dass danach eine der Blenden - durch die unabhängige Bewegbarkeit der Blenden voneinander in einer ersten Bewegungsrichtung - wieder in Schließstellung gebracht werden kann, wodurch die Gehäuseöffnung teilweise wieder verschließbar ist und so eine optisch ansprechende Erscheinung vorliegt. Die andere Blende dagegen kann in Öffnungsstellung verbleiben und eine Teilöffnung der Gehäuseöffnung frei lassen, durch welche Teilöffnung der Haltearm aus dem Gehäuse für seine Gebrauchs - bzw. Ausfahrstellung heraus ragt.

Dabei sind die Blenden in ihrer zweiten Bewegungsrichtung bewegungsmäßig miteinander gekoppelt so dass das Öffnen einer Blende die andere Blende ebenfalls öffnet, wodurch die Gehäuseöffnung für das Bewegen des Haltearms in Ausfahrstellung entsprechend freigegeben wird, was die Bedienung der Halteeinrichtung weiter vereinfacht.

Nach einer Weiterbildung der Erfindung mit den in Anspruch 3 aufgeführten Merkmalen wird vorteilhaft erreicht, dass eine breite Gehäuseöffnung freigegeben wird, die insbesondere für das Ausschwenken eines eine entsprechende Länge aufweisenden Haltearms günstig ist. Ein bevorzugtes Ausführungsbeispiel dazu ist in Anspruch 5 vorzugsweise in Verbindung mit Anspruch 6 enthalten.

Entsprechend einer in Anspruch 4 angegebenen Ausführungsform wird eine einfach und kostengünstige Ausgestaltung einer Kopplungseinrichtung für die Blenden bereit gestellt.

Nach Anspruch 8 ergibt sich ein sicheres Halten des Haltearms in Ausfahrstellung.

Gemäß einer in Anspruch 9 aufgeführten Weiterbildung wird ein Nachlaufen der Blende erzielt, so dass der Haltearm vollständig in das Gehäuse in Einfahrstellung zurück verlagerbar ist und die Blende erst dann - vorzugsweise automatisch, beispielsweise durch Federkraft - wieder in Schließstellung bringbar ist.

Eine besonders einfache Bedienung der Halteeinrichtung ergibt sich aus Anspruch 10, wonach die Blende automatisch in Öffnungsstellung gebracht wird, wenn die rastende Schließstellung aufgehoben wird. Dazu kann die Blende beispielsweise mittels einer so genannten und an sich bekannten Push - Push - Kinematik rastend in der Schließstellung gehalten werden. Durch einfaches Drücken der Blende wird diese dann über ihre Vorspannung in die Öffnungsstellung bewegt und nimmt dabei die andere Blende gekoppelt mit.

Bevorzugt wird eine Ausführungsvariante der Halteeinrichtung entsprechend Anspruch 11, nach der zwei Halteeinrichtungen mit jeweils einem Aufnahmeelement bereit gestellt werden, so dass innerhalb des Kraftfahrzeugs sowohl für Fahrer als auch Beifahrer eine Ablagemöglichkeit für einen Behälter gegeben ist.

Die Erfindung nach nachfolgend anhand von Ausführungsbeispielen mit Bezug auf die Zeichnung näher erläutert. Es zeigen:
- Fig. 1: von einem Kraftfahrzeug ein Innenausstattungsteil mit einer darin eingesetzten Halteeinrichtung für einen Nahrungsmittel - bzw. Getränkebehälter mit in Schließstellung vorliegender Blendenanordnung,
- Fig. 2: die Halteinrichtung nach Fig. 1 in einem Teilschnitt mit in Öffnungsstellung befindlicher Blendenanordnung und in Einfahrstellung angeordneten Haltearmen,
- Fig. 3: die Halteeinrichtung nach Fig. 2 mit in Ausfahrstellung gebrachten Haltearmen für Behälter und
- Fig. 4: die Halteeinrichtung mit einem der Haltearme in Ausfahrstellung und teilweise geschlossener Blendenanordnung.

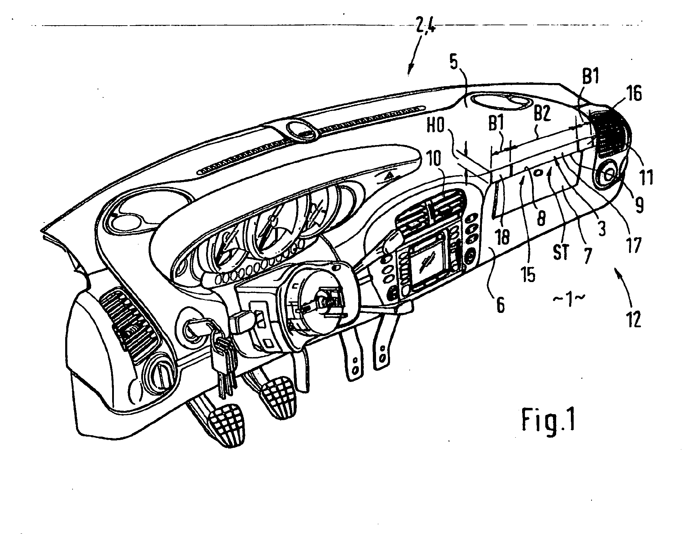

Von einem Innenraum 1 eines in den Fig. 1 bis 4 sonst nicht weiter dargestellten Kraftfahrzeugs, insbesondere Kraftwagen, ist ein Innenausstattungsteil 2 zu sehen, in welches Innenausstattungsteil 2 eine auch als Cupholder bezeichnete Halteeinrichtung 3 eingesetzt ist. Im gezeigten Ausführungsbeispiel ist das Innenausstattungsteil 2 durch eine Schalttafel 4 gebildet, die ein Oberteil 5 und ein Unterteil 6 besitzt, zwischen denen die Halteeinrichtung 3 angeordnet ist. Die Schalttafel 4 weist einen Handschuhkasten auf, von dem lediglich ein Kastendeckel 7 zu sehen ist, der mit seinem oberen Deckelrand 8 bis an die Unterseite 9 der Halteeinrichtung 3 heran reicht. Mithin ist die Halteeinrichtung 3 zwischen Handschuhkasten und Oberteil 5 der Schalttafel 4 angeordnet und darüber hinaus so platziert, das sie zwischen zwei Luftauslässen 10 und 11 einer hier nicht näher dargestellten Luftbehandlungseinrichtung für den Innenraum 1 zu liegen kommt. Der Luftauslass 10 ist als so genannter Mittenauslass und der Luftauslass 11 als so genannter Seitenauslass, hier in Vorwärtsfahrtrichtung des Kraftfahrzeugs rechts, in der Schalttafel 4 ausgeführt. Demnach ist die Halteeinrichtung 3 der Beifahrerseite 12 des Kraftfahrzeugs zugeordnet.

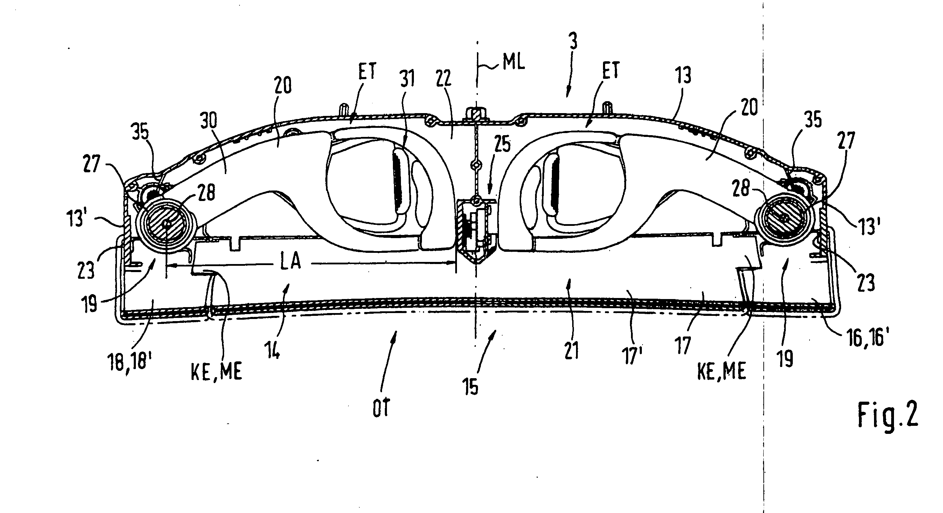

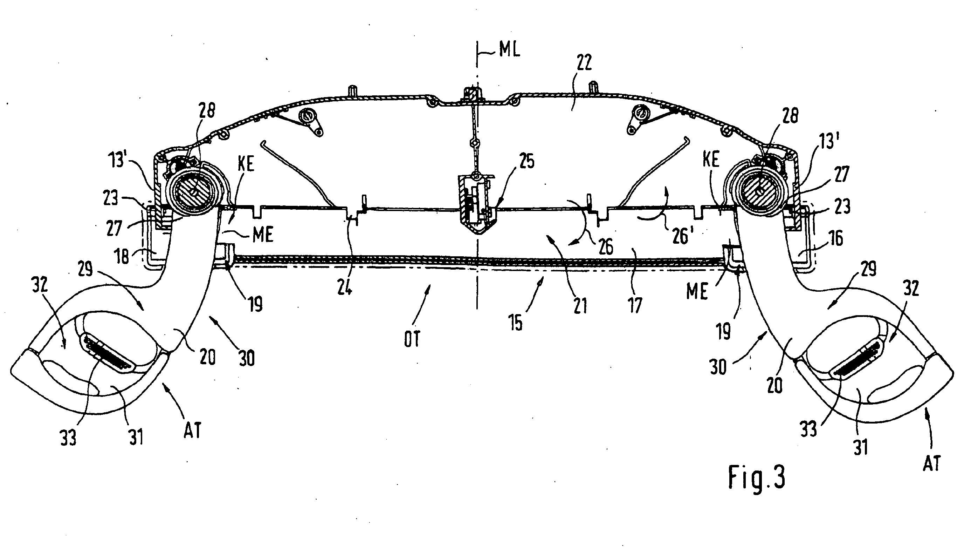

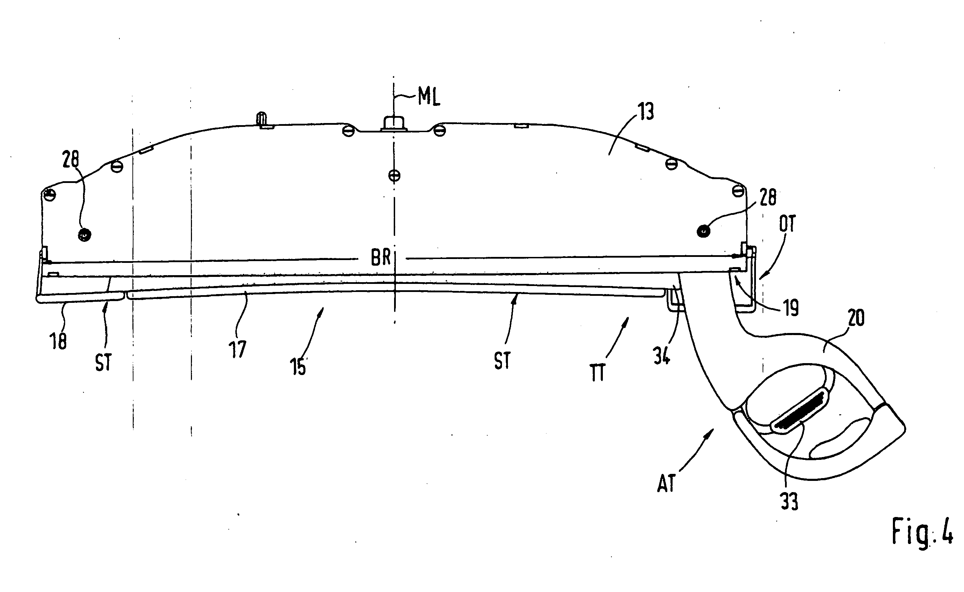

Die Halteeinrichtung 3 besitzt ein Gehäuse 13 mit einer Gehäuseöffnung 14, die mittels einer mehrteiligen Blendenanordnung 15 verschließbar und zumindest teilweise freigebbar ist. In Fig. 1 befindet sich die Blendenanordnung 15 in Schließstellung ST und verschließt die Gehäuseöffnung 14, und in Fig. 2 und 3 ist die Blendenanordnung 15 in eine Öffnungsstellung OT verlagert. In Fig. 4 nimmt die Blendenanordnung 15 eine Teilöffnungsstellung TT ein, in der die Gehäuseöffnung 14 in ihrer Öffnungsbreite (BR) teilweise verschlossen ist.

Die Blendenanordnung 15 umfasst zumindest zwei Blenden 16 und 17, im gezeigten Ausführungsbeispiel sind drei Blenden 16, 17 und 18 vorgesehen, die in Schließstellung ST, in Öffnungsstellung OT und in zumindest in die in Fig. 4 gezeigte Teilöffnungsstellung TT verlagert werden können. In der dargestellten Teilöffnungsstellung TT wird eine erste Teilöffnung 19 der Gehäuseöffnung 14 von der ersten Blende 16 frei gelassen, durch die ein weiter unten beschriebener Haltearm 20 aus dem Gehäuse 13 heraus ragt. In Schließstellung ST ist die erste Teilöffnung 19 von der Blende 16 abgedeckt. Eine zweite Teilöffnung 21 der Gehäuseöffnung 13 wird von der zweiten Blende 17 verschlossen oder freigegeben. Wird lediglich eine Halteeinrichtung 3 mit einem einzigen Haltearm 20 bereit gestellt, genügen diese beiden Blenden 16 und 17. Bei der zu sehenden Halteeinrichtung 3 sind zwei Haltearme 20 und demnach für die Haltearme 20 zwei erste Teilöffnungen 19 vorgesehen, zwischen denen die zweite Teilöffnung 21 liegt. Der ersten Teilöffnung 19 ist die Blende 16, der zweiten ersten Teilöffnung 19 die Blende 18 und der zweiten Teilöffnung 21 ist die Blende 17 zugeordnet.

Die Halteeinrichtung 3 ist zu einer Mittellängsachse ML spiegelsymmetrisch ausgebildet, welche in den Figuren in der Zeichnungsebene liegt. Es wird daher nachfolgend lediglich eine Hälfte der Halteeinrichtung 3 mit den Blenden 16 und 17 sowie dem rechten Haltearm 20 beschrieben. Die Blenden 16, 17 sind am Gehäuse 13, vorzugsweise an einem Gehäuseboden 22, jeweils in horizontalen und miteinander fluchtenden Schwenkachsen 23 und 24 gelagert. Die mittlere Blende 17 ist in ihrer Schließstellung ST rastend gehalten, beispielsweise mit einer so genannten Push - Push - Kinematik 25, die mittig am Gehäuse 13 angeordnet sein kann. Durch Drücken der Blende 17 wird diese durch die Push - Push - Kinematik 25 von ihrer Rastung freigegeben und kann somit aus der Schließstellung ST in die Öffnungsstellung OT, vorzugsweise durch eine Federkraft bzw. vorgespannt, selbsttätig geklappt werden. Die Blende 17 kann also in Schließstellung ST in Richtung Öffnungsstellung OT, in einer Bewegungsrichtung 26, beispielsweise durch eine Feder belastet sein, so das die Blende 17 nach ihrer Freigabe durch die Push - Push - Kinematik 25 selbsttätig in die Öffnungsstellung OT bewegt wird. In dieser Bewegungsrichtung 26 ist die Blende 16 bzw. 18 mit der Blende 17 bewegungsmäßig über eine Kopplungseinrichtung KE gekoppelt, so dass die Blende 16 bzw. 18 durch die Blende 17 bis in Öffnungsstellung 0T mitgenommen wird, wodurch die Gehäuseöffnung 14 mit den Teilöffnungen 19 und 21 freigegeben wird. Die Kopplungseinrichtung KE umfasst jeweils einen seitlich über die der Teilöffnung 21 zugeordnete Blende 17 vorstehenden Mitnehmer ME, der die Blende 16 bzw. 18 lose hintergreift und somit in der Bewegungsrichtung 26 in Öffnungsstellung OT mitnimmt. In der anderen Bewegungsrichtung 26', in der die Blenden 16, 17 und 18 von der Öffnungsstellung OT bis in die Schließstellung ST gebracht werden, ist die Kopplungseinrichtung KE wirkungslos, so dass die mittlere Blende 17 in die Schließstellung ST verlagerbar ist, ohne dabei die seitlichen Blenden 16 bzw. 18 mitzunehmen, wodurch die nebeneinander liegenden Blenden 16, 17 und 18 in der Bewegungsrichtung 26' unabhängig voneinander bewegbar sind. Definitionsgemäß ist die Bewegungsrichtung 26' die erste und die Bewegungsrichtung 26 die zweite Bewegungsrichtung.

Der Haltearm 20 ist innerhalb des Gehäuses 13, vorzugsweise benachbart zu einer seitlichen Gehäusewand 13', in einer vertikalen Schwenkachse 28 mit seinem einen Ende 27 gelagert. An seinem anderen, freien Ende 29 besitz der als Bogen 30 ausgeführte Haltearm 20 ein ringförmiges Aufnahmeelement 31, das eine Aufnahmeöffnung 32 für einen hier nicht dargestellten Behälter aufweist. Ggf. kann das Aufnahmeelement 31 unterhalb der Aufnahmeöffnung 32 einen Standfuß 33 umfassen, der ein - und ausklappbar an dem Haltearm 20 bzw. Aufnahmeelement 31 angeordnet ist und vorzugsweise über eine hier nicht gezeigte mechanische Steuereinrichtung automatisch bzw. zwangsgesteuert in Abhängigkeit einer Einfahrstellung ET und einer Ausfahrstellung AT des Haltearms 20 bewegt wird. In der Einfahrstellung ET ist der Haltearm 20 mit seinem eingeklappten Standfuß 33 in dem Gehäuse 13 aufgenommen und kann durch eine Bewegung um die Schwenkachse 28 in seine Ausfahrstellung AT überführt werden, wenn zuvor die Blenden 16 und 17 - wie oben beschrieben - in Öffnungsstellung 0T gebracht worden sind. Beim Bewegen bis in die Ausfahrstellung AT wird der Standfuß 33 ausgeklappt.

In Ausfahrstellung des Haltearms 20 kann die Blende 17 in der ersten Bewegungsrichtung 26' wieder in Schließstellung ST gebracht werden, wohingegen die Blende 16 in ihrer Öffnungsstellung OT verbleibt, da die Kopplungseinrichtung KE in der ersten Bewegungsrichtung 26' unwirksam ist und die Blende 17 unabhängig von der Blende 16 bewegt werden kann. Die mittlere Teilöffnung 21 der Gehäuseöffnung 14 wird so verschlossen und die Teilöffnung 19 bleibt geöffnet.

Die seitlichen Blenden 16 und 18 weisen jeweils eine - in Richtung der Öffnungsbreite BR der Gehäuseöffnung 14 gesehen - wesentlich geringere Blendenbreite B1 als die mittlere Blende 17 auf, die eine Blendenbreite B2 besitzt. Entsprechend sind die Öffnungsbreiten der ersten und zweiten Teilöffnungen 19 und 21 bemessen. Die Blenden 16, 17 und 18 weisen neben ihrer unterschiedliche Breite B1 bzw. B2 die gleiche Höhe HO auf. Wie in Fig. 3 zu sehen ist, sind die Blenden 16 und 18 jeweils einer der Teilöffnungen 19 zugeordnet, die jeweils in ihrer Breite so bemessen sind, dass der jeweils zugeordnete Haltearm 20 mit seinem Bogen 30 in Ausfahrstellung AT gemäß Fig. 4 die jeweilige Teilöffnung 19 durchgreifen kann, auch wenn die mittlere Blende 17 in der Schließstellung ST liegt. Ist die gesamte Blendenanordnung 15 geöffnet, wie Fig. 2 und 3 zeigen, kann der Haltearm 20 bzw. können die Haltearme 20 um zugeordnete Schwenkachsen 28 durch die entsprechend offene Gehäuseöffnung 14 hindurch in Ausfahrstellung AT gebracht werden. Die Breite B2 der Blende 17 ist mithin so bemessen, dass das Ausfahren der Haltearms 20 durch die Teilöffnungen 19 und 21 möglich ist. Die Breiten B1 und B2 zusammen genommen, ergeben somit zumindest die Länge LA des Haltearms 20 mit seinem Bogen 30 und seinem Aufnahmeelement 31.

Ist die Blende 17 der zweiten Teilöffnung 21 geschlossen, der Haltearm 20 in Ausfahrstellung AT und ist die Blende 16 geöffnet, bildet die Blende 17, insbesondere durch den Mitnehmer ME, eine Verriegelungsleinrichtung 34 für den Haltearm 20 und sperrt seine Bewegung um die Schwenkachse 28, so dass er in Ausfahrstellung AT fixiert ist und nicht in Einfahrstellung ET bewegt werden kann, bis die Blende 17 wieder in Öffnungsstellung OT verlagert ist. In der Ausfahrstellung AT hält der Haltearm 20 die ihm zugeordnete Blende 16 bzw. 18, so dass diese in der Öffnungsstellung OT verbleibt, bis der Haltearm 20 manuell - bei geöffneter Blende 17 - wieder in Einfahrstellung ET verschwenkt wird. Die Blende 16 bzw. 18 ist in ihrer ersten Bewegungsrichtung 26' mit einer Kraft, beispielsweise einer Feder, beaufschlagt, so dass die Blende 16 bzw. 18 beim Einschwenken des Haltearms 20 in Einfahrstellung ET aufgrund dieser Kraft selbsttätig in die Schließstellung ST bewegt wird. Diese Kraft kann beim Öffnen der Blende 16, also in Bewegungsrichtung 26, aufgebaut bzw. erzeugt werden, also die Feder vorgespannt werden. Vorzugsweise ist für die entgegengesetzte Bewegungsrichtung 26' der Blende 16 bzw. 18 eine Dämpfungseinrichtung (nicht dargestellt) vorgesehen, die ein verzögertes Schließen bzw. eine Nachlaufen der Blende 16 bzw. 18 bewirkt, wodurch die Blende 16 bzw. 18 erst geschlossen wird, wenn der Haltearm 20 nahezu in bzw. vollständig seine Einfahrstellung ET erreicht hat. Die Dämpfungseinrichtung kann als Bremse ausgeführt sein, die über einen nicht gezeigten Hebel mit der Blende 16 bzw. 18 verbunden ist.

Im gezeigten Ausführungsbeispiel der Halteeinrichtung 3 mit zwei Haltearmen 20, die gegenläufig in Richtung von der Einfahrstellung ET in die Ausfahrstellung AT ausfahren und entsprechend kraftbeaufschlagt sind, beispielsweise durch eine um die Schwenkachse 28 gelegt Schenkelfeder 35, sind - wie erwähnt - die drei Blenden 16, 17 und 18 vorgesehen, so dass die mittlere Blende 17 eine Mittenblende 17' und die beiden seitlichen Blenden 16 und 18 jeweils eine Seitenblende 16' und 18' bilden. Die Mittenblende 17' weist dabei für die beiden Seitenblenden 16' und 18' die Verriegelungseinrichtung 34 und die Kopplungseinrichtung KE auf.

Es sei noch erwähnt, dass der/die Haltearm(e) 20 in Einfahrstellung ET rastend innerhalb des Gehäuses 13 arretiert sein können, beispielsweise über eine weitere, hier nicht zu sehenden Push - Push - Kinematik. Durch Aufheben dieser Rastung wird der Haltearm 20 dann über die Feder 35 in die Ausfahrstellung AT bewegt.

## Patentansprüche

1. Halteeinrichtung (3) für einen und/oder Getränkebehälter im Innenraum eines Kraftfahrzeugs, mit einem Gehäuse (13), zumindest einem in Einfahrstellung in dem Gehäuse aufgenommen Haltearm (20) mit einem Aufnahmeelement für den Behälter und mit einer einer Gehäuseöffnung (14) zugeordneten mehrteiligen Blendenanordnung (15), welche-Blendenanordnung in der Einfahrstellung des Haltearms die Gehäuseöffnung verschließt und für eine Ausfahrstellung des Haltearms die Gehäuseöffnung zumindest teilweise freigibt, wobei die mehrteilige Blendenanordnung (15) mehrere an dem Gehäuse (13) beweglich gelagerte Blenden (16, 17, 18) umfasst, die in einer ersten Bewegungsrichtung (26') von einer die Gehäuseöffnung (14) freigebenden Öffnungsstellung (OT) in eine Schließstellung (ST) unabhängig voneinander bewegbar sind **dadurch gekennzeichnet**
**dass** die Blenden (16, 17, 18) der Blendenanordnung (15) in einer zweiten Bewegungsrichtung (26) von der Schließstellung (ST) in die Öffnungsstellung (OT) bewegungsmäßig mittels einer Kopplungseinrichtung (KE) miteinander gekoppelt sind.

2. Halteeinrichtung nach Anspruch 1 **dadurch gekennzeichnet, dass** die Blenden (16, 17, 18) nebeneinander angeordnet sind.

3. Halteeinrichtung nach einem der vorhergehenden Ansprüche, **dadurch gekennzeichnet, dass** die Blenden (16, 17, 18) in jeweils einer Schwenkachse (23, 24) beweglich am Gehäuse (13) gelagert sind und dass die Schwenkachsen (23, 24) miteinander fluchten.

4. Halteeinrichtung nach Anspruch 1, **dadurch gekennzeichnet, dass** die Kopplungseinrichtung (KE) durch einen an einer der Blenden (17) angeordneten Mitnehmer (ME) für die andere der Blenden (16, 18) gebildet ist.

5. Halteeinrichtung nach einem der vorhergehenden Ansprüche, **dadurch gekennzeichnet, dass** eine der Blenden (16, 18) einer ersten Teilöffnung (19) der Gehäuseöffnung (14) zugeordnet ist, welche Teilöffnung (19) eine Öffnungsbreite derart aufweist, dass der Haltearm (20) in Ausfahrstellung (AT) diese Teilöffnung (19) durchgreifen kann, und dass die andere der Blenden (17) einer zweiten Teilöffnung (21) der Gehäuseöffnung (14) zugeordnet ist, welche zusammen mit der ersten Teilöffnung (19) eine Öffnungsbreite (BR) derart aufweist, dass der Haltearm (20) mit seinem Aufnahmeelement (31) von seiner Einfahrstellung (ET) in die Ausfahrstellung (AT) verlagerbar ist.

6. Halteeinrichtung nach Anspruch 5, **dadurch gekennzeichnet, dass** die Blende (16, 18), die der ersten Teilöffnung (19) zugeordnet ist, eine Breite (B1) aufweist, die wesentlich geringer als die Breite (B2) der anderen Blende (17) ist.

7. Halteeinrichtung nach Anspruch 4 und 5, **dadurch gekennzeichnet, dass** der Mitnehmer (ME) der Kopplungseinrichtung (KE) an der Blende (17) für die zweite Teilöffnung (21) angeordnet ist.

8. Halteeinrichtung nach Anspruch 5, **dadurch gekennzeichnet, dass** in der Ausfahrstellung (AT) des Haltearms (20) die Blende (17), die der zweiten Teilöffnung (21) zugeordnet ist, eine Verriegelungseinrichtung (34) für den Haltearm (20) bildet, wenn diese Blende (17) in ihrer die Gehäuseöffnung (14) zumindest teilweise verschließenden Schließstellung (ST) vorliegt.

9. Halteeinrichtung nach Anspruch 5 **dadurch gekennzeichnet, dass** die Blende (16, 18), die der ersten Teilöffnung (19) zugeordnet ist, ausgehend von ihrer Öffnungsstellung (OT), gegen eine Dämpfungseinrichtung in die Schließstellung (ST) bewegbar ist, wenn der Haltearm (20) aus seiner Ausfahrstellung (AT) in der Einfahrstellung (ET) gebracht wird.

10. Halteeinrichtung nach Anspruch 5 **dadurch gekennzeichnet, dass** die Blende (17), die der zweiten Teilöffnung (21) zugeordnet ist, rastend in Schließstellung (ST) gehalten ist und in ihrer zweiten Bewegungsrichtung (26), also in Richtung Öffnungsstellung (OT), vorgespannt ist, wobei die Vorspannung so gewählt ist, dass diese Blende (17) die andere Blende (16, 18) in Richtung Öffnungsstellung (OT) mitnimmt.

11. Halteeinrichtung nach einem der vorhergehenden Ansprüche, **dadurch gekennzeichnet, dass** drei nebeneinander liegende Blenden (16, 17, 18) der Blendenanordnung (15) am Gehäuse (13) gelagert sind, dass das Gehäuse (13) zwei Haltearme (20) mit jeweils einem Aufnahmeelement (31) aufnimmt, dass somit die Gehäuseöffnung (14) zwei erste Teilöffnungen (19) und dazwischen eine zweite Teilöffnung (21) aufweist, dass demnach für die ersten Teilöffnungen (19) die Blenden (16, 18) jeweils eine Seitenblende (16', 18') und die der zweiten Teilöffnung (21) zugeordnete Blende (17) eine Mittenblende (17') bilden.

12. Halteeinrichtung nach Anspruch 1 und 11, **dadurch gekennzeichnet, dass** die Mittenblende (17') die Kopplungseinrichtung (KE) für die Seitenblenden (16', 18') und mithin die Verriegelungseinrichtung (34) für die Haltearme (20) aufweist.

13. Kraftfahrzeug, **gekennzeichnet durch** eine Halteeinrichtung (3) nach zumindest einem der Ansprüche 1 bis 12.

14. Kraftfahrzeug nach Anspruch 13, **dadurch gekennzeichnet, dass** die Halteeinrichtung (3) in einer Schalttafel (4) des Kraftfahrzeugs angeordnet ist, dass seitlich neben der Halteeinrichtung (3) jeweils ein Luftauslass 10, 11) einer Luftbehandlungseinheit liegt und dass in Ausfahrstellung (AT) der Haltearme (20) zumindest deren Aufnahmeelemente (31) jeweils vor einem der Luftauslässe (10, 11) angeordnet sind.

## Claims

1. Holder (3) for a food and/or beverage container in the interior of a motor vehicle, comprising a housing (13), at least one holding arm (20), which is accommodated in the housing in a retracted position, a receiving element for the container, and a multi-part mask arrangement (15) associated with a housing opening (14), which mask arrangement closes the housing opening (14) when the holding arm is in the retracted position, and at least partially uncovers the housing opening for a deployed position of the holding arm, the multi-part mask arrangement (15) comprising a plurality of masks (16, 17, 18), which are mounted for movement on the housing (13) and are movable independently of one another in a first direction (26') of movement from an opening position (OT) uncovering the housing opening (14) to a closing position (ST), **characterized in that**, in a second direction (26) of movement from the closing position (ST) to the opening position (OT), the masks (16, 17, 18) of the mask arrangement (15) are coupled to one another in terms of movement by means of a coupling arrangement (KE).

2. Holder according to Claim 1, **characterized in that** the masks (16, 17, 18) are arranged adjacent to one another.

3. Holder according to one of the preceding claims, **characterized in that** the masks (16, 17, 18) are each mounted movably on the housing (13) in a respective pivot (23, 24), and **in that** the pivots (23, 24) are in alignment with one another.

4. Holder according to Claim 1, **characterized in that** the coupling arrangement (KE) is formed by a driver (ME), disposed on one of the masks (17), for the other masks (16, 18).

5. Holder according to one of the preceding claims, **characterized in that** one of the masks (16, 18) is associated with a first partial opening (19) of the housing opening (14), which partial opening (19) has a width such that the holding arm (20) can reach through the said partial opening (19) in a deployed position (AT), and **in that** the other one of the masks (17) is associated with a second partial opening (21) of the housing opening (14), which second partial opening has, together with the first partial opening (19), a width (BR) such that the holding arm (20) can be shifted with its receiving element (31) from its retracted position (ET) to the deployed position (AT).

6. Holder according to Claim 5, **characterized in that** the mask (16, 18) which is associated with the first partial opening (19) has a width (B1) which is substantially less than the width (B2) of the other mask (17).

7. Holder according to Claims 4 and 5, **characterized in that** the driver (ME) of the coupling arrangement (KE) is disposed on the mask (17) for the second partial opening (21).

8. Holder according to Claim 5, **characterized in that**, in the deployed position (AT) of the holding arm (20), the mask (17) which is associated with the second partial opening (21) forms a locking arrangement (34) for the holding arm (20) when this mask (17) is in its closing position (ST) closing the housing opening (14) at least partially.

9. Holder according to Claim 5, **characterized in that** the mask (16, 18) which is associated with the first partial opening (19), starting out from its opening position (OT), is movable against a damping device to the closing position (ST) when the holding arm (20) is brought from its deployed position (AT) to the retracted position (ET).

10. Holder according to Claim 5, **characterized in that** the mask (17) which is associated with the second partial opening (21) is held with a latching action in the closing position (ST) and is preloaded in its second direction (26) of movement, i.e. in the direction of the opening position (OT), the preload being selected such that this mask (17) takes the other mask (16, 18) along in the direction of the opening position (OT).

11. Holder according to one of the preceding claims, **characterized in that** three adjacent masks (16, 17, 18) of the mask arrangement (15) are mounted on the housing (13), **in that** the housing (13) accommodates two holding arms (20), each having a receiving element (31), **in that** the housing opening (14) thus has two first partial openings (19) with a second partial opening (21) in between, **in that**, accordingly, the masks (16, 18) each form a lateral mask (16', 18') for the first partial openings (19), and the mask (17) which is associated with the second partial opening (21) forms a central mask (17').

12. Holder according to Claims 1 and 11, **characterized in that** the central mask (17') has the coupling arrangement (KE) for the lateral masks (16', 18') and hence the locking arrangement (34) for the holding arms (20).

13. Motor vehicle, **characterized by** a holder (3) according to at least one of Claims 1 to 12.

14. Motor vehicle according to Claim 13, **characterized in that** the holder (3) is disposed in a dashboard (4) of the motor vehicle, **in that** respective air outlets (10, 11) of an air conditioning unit are situated laterally beside the holder (3), and **in that**, in the deployed position (AT) of the holding arms (20), at least the receiving elements (31) thereof are each arranged in front of one of the air outlets (10, 11).

## Revendications

1. Dispositif de maintien (3) pour un récipient de nourriture et/ou de boisson dans l'habitacle d'un véhicule automobile, comprenant un boîtier (13), au moins un bras de maintien (20) reçu dans le boîtier dans la position escamotée, avec un élément de réception pour le récipient et avec un agencement de bandeau (15) en plusieurs parties associé à une ouverture (14) du boîtier, lequel agencement de bandeau ferme l'ouverture du boîtier dans la position escamotée du bras de maintien et libère au moins en partie l'ouverture du boîtier pour une position sortie du bras de maintien, l'agencement de bandeau (15) en plusieurs parties comprenant plusieurs bandeaux (16, 17, 18) montés mobiles sur le boîtier (13), qui peuvent être déplacés indépendamment les uns des autres dans un premier sens de déplacement (26') depuis une position d'ouverture (OT) libérant l'ouverture (14) du boîtier dans une position de fermeture (ST), **caractérisé en ce que** les bandeaux (16, 17, 18) de l'agencement de bandeau (15) sont accouplés en les uns aux autres au moyen d'un dispositif d'accouplement (KE) mouvement, dans un deuxième sens de déplacement (26), de la position de fermeture (ST) dans la position d'ouverture (OT).

2. Dispositif de maintien selon la revendication 1, **caractérisé en ce que** les bandeaux (16, 17, 18) sont disposés les uns à côté des autres.

3. Dispositif de maintien selon l'une quelconque des revendications précédentes, **caractérisé en ce que** les bandeaux (16, 17, 18) sont montés sur le boîtier (13) à chaque fois de manière mobile dans un axe de pivotement (23, 24) et **en ce que** les axes de pivotement (23, 24) sont alignés l'un avec l'autre.

4. Dispositif de maintien selon la revendication 1, **caractérisé en ce que** le dispositif d'accouplement (KE) est formé par un dispositif d'entraînement (ME) disposé sur l'un des bandeaux (17), pour l'autre des bandeaux (16, 18).

5. Dispositif de maintien selon l'une quelconque des revendications précédentes, **caractérisé en ce que** l'un des bandeaux (16, 18) est associé à une première ouverture partielle (19) de l'ouverture (14) du boîtier, laquelle ouverture partielle (19) présente une largeur d'ouverture telle que le bras de maintien (20), dans la position sortie (AT), puisse venir en prise à travers cette ouverture partielle (19), et **en ce que** l'autre des bandeaux (17) est associé à une deuxième ouverture partielle (21) de l'ouverture (14) du boîtier, qui présente, conjointement avec la première ouverture partielle (19), une largeur d'ouverture (BR) telle que le bras de maintien (20) puisse être décalé avec son élément de réception (31) de sa position escamotée (ET) dans la position sortie (AT).

6. Dispositif de maintien selon la revendication 5, **caractérisé en ce que** le bandeau (16, 18) qui est associé à la première ouverture partielle (19) présente une largeur (B1) qui est considérablement plus petite que la largeur (B2) de l'autre bandeau (17).

7. Dispositif de maintien selon les revendications 4 et 5, **caractérisé en ce que** le dispositif d'entraînement (ME) du dispositif d'accouplement (KE) est disposé sur le bandeau (17) pour la deuxième ouverture partielle (21).

8. Dispositif de maintien selon la revendication 5, **caractérisé en ce que** dans la position sortie (AT) du bras de maintien (20), le bandeau (17), qui est associé à la deuxième ouverture partielle (21), forme un dispositif de verrouillage (34) pour le bras de maintien (20), lorsque ce bandeau (17) est dans sa position de fermeture (ST) fermant au moins en partie l'ouverture (14) du boîtier.

9. Dispositif de maintien selon la revendication 5, **caractérisé en ce que** le bandeau (16, 18) qui est associé à la première ouverture partielle (19), partant de sa position d'ouverture (OT), peut être déplacé dans la position de fermeture (ST) contre un dispositif d'amortissement, lorsque le bras de maintien (20) est amené de sa position sortie (AT) dans la position escamotée (ET).

10. Dispositif de maintien selon la revendication 5, **caractérisé en ce que** le bandeau (17), qui est associé à la deuxième ouverture partielle (21), est maintenu par encliquetage dans la position de fermeture (ST) et est précontraint dans son deuxième sens de déplacement (26), c'est-à-dire dans la direction de la position d'ouverture (OT), la précontrainte étant choisie de telle sorte que ce bandeau (17) entraîné l'autre bandeau (16, 18) dans la direction de la position d'ouverture (OT).

11. Dispositif de maintien selon l'une quelconque des revendications précédentes, **caractérisé en ce que** trois bandeaux adjacents (16, 17, 18) de l'agencement de bandeau (15) sont montés sur le boîtier (13), **en ce que** le boîtier (13) reçoit deux bras de maintien (20) avec un élément de réception (31) respectif, **en ce que** l'ouverture (14) du boîtier présente ainsi deux premières ouvertures partielles (19) et une deuxième ouverture partielle (21) entre elles, **en ce que** par conséquent, pour les premières ouvertures partielles (19), les bandeaux (16, 18) forment à chaque fois un bandeau latéral (16', 18') et le bandeau (17) associé à la deuxième ouverture partielle (21) forme un bandeau central (17').

12. Dispositif de maintien selon les revendications 1 et 11, **caractérisé en ce que** le bandeau central (17') présente le dispositif d'accouplement (KE) pour les bandeaux latéraux (16', 18') et donc le dispositif de verrouillage (34) pour les bras de maintien (20).

13. Véhicule automobile, **caractérisé par** un dispositif de maintien (3) selon au moins l'une quelconque des revendications 1 à 12.

14. Véhicule automobile selon la revendication 13, **caractérisé en ce que** le dispositif de maintien (3) est disposé dans un tableau de bord (4) du véhicule automobile, **en ce que** latéralement à côté du dispositif de maintien (3) est située à chaque fois une sortie d'air (10, 11) d'une unité de traitement d'air et **en ce que** dans la position sortie (AT) des bras de maintien (20), au moins leurs éléments de réception (31) sont disposés à chaque fois devant l'une des sorties d'air (10, 11) .
